# EUROPÄISCHE PATENTSCHRIFT

(11) **EP 1 160 112 B1**
(45) Veröffentlichungstag und Bekanntmachung des Hinweises auf die Patenterteilung: **24.01.2007**
(21) Anmeldenummer: 00112052.6
(22) Anmeldetag: 02.06.2000
(51) Int. Cl.: B60J 7/02

(54) **Dachmodul für ein Kraftfahrzeug**
Roof unit for motor vehicle
Module de toit pour véhicule automobile

(43) Veröffentlichungstag der Anmeldung: 05.12.2001
(73) Patentinhaber: Webasto Vehicle Systems International GmbH, 82131 Stockdorf (DE)
(72) Erfinder: Gaillard, Francois de, 85390 Mouilleron en pareds (FR)
(74) Vertreter: Konnerth, Dieter Hans

(56) Entgegenhaltungen:
- EP-A- 0 203 484
- EP-A- 0 960 804

## Beschreibung

Die vorliegende Erfindung betrifft ein Dachmodul mit einem Deckel und mit einem Rahmen, der in eine in einem Dachoberteil eines Kraftfahrzeugs vorgesehene Öffnung einsetzbar ist, wobei das Dachmodul Mittel umfaßt, von denen zumindest Elemente unter Rändern der Öffnung positionierbar sind, wenn sich das Dachmodul in seiner normalen Position an dem Dachoberteil befindet, wie zum ßeispiel aus EP-A-0 960 804 bekannt.

Ein solches als Schiebedacheinheit an sich bekanntes Dachmodul umfaßt Mittel oder Einrichtungen, von denen zumindest Elemente derart ausgeführt sind, daß sie unter den Rändern der Öffnung angeordnet sind, die als Auflage für eine solche Einheit dienen. Es handelt sich beispielsweise um Führungsschienen für eine Schiebeblende oder einen Schiebehimmel, der mit dem verschiebbaren Deckel des Schiebedaches beweglich ist, oder um eine Betätigungseinheit für die Antriebskabel dieses Deckels. Aufgrund ihrer gegenüber der Öffnung größeren Gesamtabmessung kann eine solche Schiebedacheinheit nicht direkt durch ein im wesentlichen vertikales Absenken gegen das Fahrzeugdach an diesem angeordnet werden. Die Schiebedacheinheit muß vielmehr in mehrere Teile zerlegt an dem Fahrzeug montiert werden.

Aufgabe der vorliegenden Erfindung ist es, die Nachteile des bekannten Dachmoduls des vorgenannten Typs zu vermeiden und ein Dachmodul dieses Typs vorzuschlagen, das am Dach eines Fahrzeugs mit einer im wesentlichen vertikalen Absenkbewegung bei vermindertem Montageaufwand am Dach angebracht werden kann.

Die Aufgabe wird durch die Merkmale des kennzeichnenden Teils des Anspruchs 1gelöst.

Somit kann zum Anbringen eines erfindungsgemäßen Dachmoduls dieses außerhalb des Fahrzeugs zusammengebaut werden, wobei sich die Elemente in ihrer hängenden Position befinden und innerhalb einer Umrißlinie der Öffnung liegen. Dann wird das Dachmodul auf die Öffnung bis in seine normale Betriebsposition an dieser Öffnung abgesenkt, woraufhin jedes Element in seine aufgerichtete Normalposition unter den entsprechenden Rändern der Öffnung angeordnet und in dieser neuen Position gehalten wird. Der Montagevorgang eines solchen Dachmoduls an dem Fahrzeug wird somit sehr vereinfacht. Die Elemente, die zum Einbau des Dachmoduls lageveränderbar sind, können generell jegliche Bauteile sein, die nach dem Einbau über die Umrißlinie der Öffnung hinausstehen. Wenn das Dachmodul einen Schiebedachdeckel enthält, so können die Elemente Führungsschienen für diesen Schiebedachdeckel sein, die zum Einsetzen des Dachmoduls um Gelenke abklappbar sind.

Vorteilhafte Ausgestaltungen der Erfindung sind in den Unteransprüchen angegeben.

Eine bevorzugte Ausgestaltung sieht vor, daß die Mittel zwei seitliche sich teilweise unter dem Dachoberteil erstreckende Führungsschienen zur Führung einer verschiebbaren Blende umfassen und daß jede dieser seitlichen Führungsschienen einen vorderen Schienenabschnitt und einen hinteren Schienenabschnitt aufweist, die an einer querliegenden Gelenkachse miteinander schwenkbar verbunden sind, und daß Mittel vorgesehen sind, um den hinteren Abschnitt jeder Führungsschiene im wesentlichen in Ausrichtung mit dem vorderen Abschnitt zu halten, so daß die Blende seitlich verschiebbar geführt ist, wenn das Dachmodul in der Öffnung des Dachoberteils angeordnet ist.

Zweckmäßigerweise ist der bewegliche Deckel ein Schiebedachdeckel, der relativ zum Rahmen verschiebbar ist, und die Blende, die zum unterseitigen Abdecken des Deckel vorgesehen ist, ist zusammen mit dem Deckel verschiebbar.

Des weiteren kann vorgesehen sein, daß das Dachmodul in seinem vorderen Teil Führungskanäle für Antriebskabel des beweglich gelagerten Deckels, insbesondere Schiebedachdeckels, aufweist, die sich bis zu einem von einem Getriebemotor betätigten Ritzel erstrecken, daß das Dachmodul eine um eine Querachse angelenkte Tragplatte umfaßt, die unter einem vorderen Rahmenelement des Rahmens befestigt ist, und daß die Tragplatte den Getriebemotor, das Ritzel und die Führungskanäle enthält.

Weitere Besonderheiten und Vorteile der vorliegenden Erfindung gehen aus der nachfolgenden Beschreibung eines Ausführungsbeispiels eines erfindungsgemäßen Dachmoduls unter Bezugnahme auf Zeichnungen hervor. Es zeigt:
- Fig. 1: in einer schematischen perspektivischen Ansicht das Anbringen eines als Schiebedacheinheit gebildeten Dachmoduls auf einer Fahrzeugdachkonstruktion;
- Fig. 2: in einer schematischen Längsschnittansicht entlang dem Schnitt II-II in Figur 1 das Anbringen einer Schiebedacheinheit nach einer weiteren Ausführungsart der vorliegenden Erfindung; und
- Fig. 3: in schematischen Längsschnitten ähnlich Figur 2 in den drei Ansichten (a), (b) und (c) drei Phasen der Anbringung einer Schiebedacheinheit nach der Ausführungsart der Figur 1.

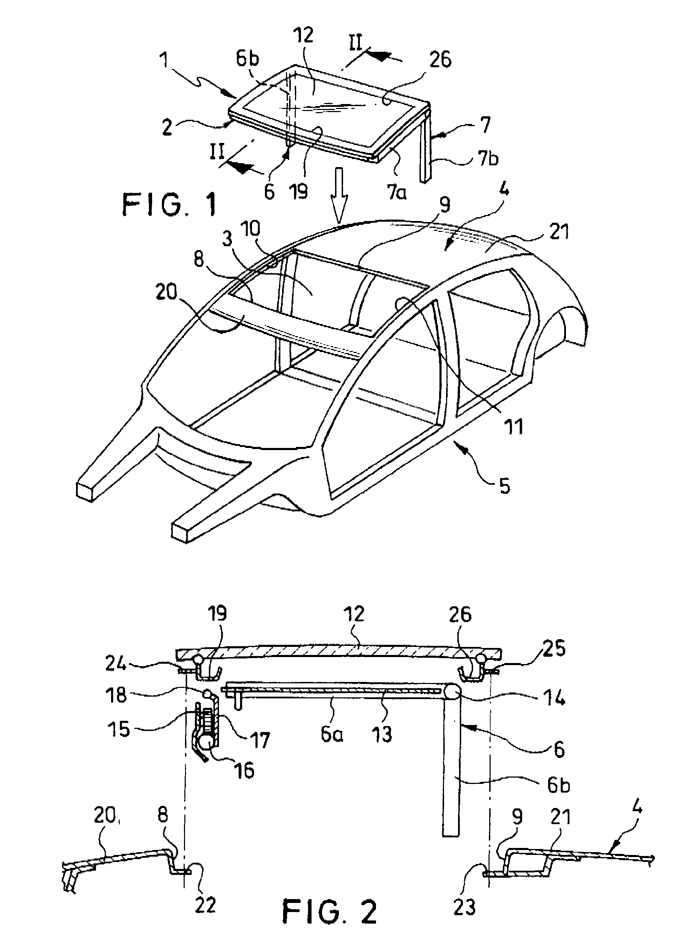

Bei der in Figur 1 dargestellten Ausführungsart umfaßt ein Dachmodul in Form einer Schiebedacheinheit 1 einen Rahmen 2, der in eine Öffnung 3 eingesetzt werden kann, die in einem Dachoberteil 4 eines Kraftfahrzeugs 5 vorgesehen ist. Die Schiebedacheinheit 1 umfaßt Mittel 6, 7 mit Elementen 6b, 7b, die unter einem vorderen und einem hinteren Rand 8 bzw. 9 sowie einem rechten und einem linken Rand 10 bzw. 11 der Öffnung 3 positionierbar sind, wenn sich die Schiebedacheinheit 1 in ihrer Normalposition an dem Dachoberteil 4 befindet.

Gemäß der vorliegenden Erfindung sind die Elemente 6b, 7b am Rahmen 2 derart angelenkt, daß jedes Element 6b, 7b zwischen einer hängenden Position (siehe Fig. 1), in der es im wesentlichen nach unten hängt, so daß es bei der Anbringung des Rahmens 2 am Dachoberteil 4 durch die Öffnung 3 gesteckt werden kann, und einer aufgerichteten normalen Betriebsposition (nicht in der Figur dargestellt) beweglich ist, in der entsprechende ergänzende Befestigungsmittel (nicht dargestellt) des Rahmens 2, der Schiebedacheinheit 1 oder des Fahrzeugs 5 das Element 6b, 7b in seiner aufgerichteten Normalposition unter den entsprechenden Rändern 8, 9 der Öffnung 3 halten.

Wie detaillierter in Figur 2 dargestellt ist, umfaßt die Schiebedacheinheit 1 eine Platte oder einen Deckel 12, der in bezug auf den Rahmen 2 der Schiebedacheinheit 1 gleitend beweglich ist, eine bewegliche Blende 13, die mit dem Deckel 12 gleitet und den Deckel 12 verdeckt, und zwei seitliche Führungsschienen 6, 7 für die Blende 13, die sich zum Teil unter dem Dachoberteil 4 des Fahrzeugs 5 erstrecken.

Wie in Figur 2 schematisch dargestellt ist, wird jede der beiden seitlichen Führungsschienen 6, 7 von zwei vorderen Schienenabschnitten 6a, 7a und zwei hinteren Schienenabschnitten 6b, 7b gebildet, die miteinander in einer querliegenden Gelenkachse 14 verbunden und um diese schwenkbar sind.

Die Schiebedacheinheit 1 umfaßt ferner Mittel (nicht dargestellt), um den hinteren Abschnitt 6b, 7b jeder Führungsschiene 6, 7 in seiner aufgerichteten normalen Betriebsposition, in der er im wesentlichen in Ausrichtung mit dem vorderen Abschnitt 6a, 7a angeordnet ist, zu halten, so daß die Blende 13 seitlich geführt gehalten ist, wenn die Blende 13 und der Deckel 12 verschoben werden, nachdem die Schiebedacheinheit 1 in der Öffnung 3 des Dachoberteils 4 angeordnet worden ist.

Die Mittel, die den hinteren Abschnitt 6b, 7b jeder Führungsschiene 6, 7 im wesentlichen in Ausrichtung mit dem vorderen Abschnitt 6a, 7a der Führungsschiene 6, 7 halten, können an sich bekannte beliebige Mittel zum Feststellen eines Gelenks oder Mittel, wie beispielsweise Haken, sein, die mit entsprechenden Vorsprüngen des Dachoberteils 4 oder des Fahrzeugs 5 zusammenwirken, um jeden hinteren Abschnitt 6b, 7b in seiner ausgerichteten Position zu halten.

Wie ebenfalls schematisch in Figur 2 dargestellt ist, umfaßt die Schiebedacheinheit 1 in ihrem vorderen Teil Kanäle für Antriebskabel (nicht dargestellt) zum Bewegen des Deckels 12, wobei die Kanäle diese Kabel bis zu einem Antriebsritzel 15 führen, das von einem schematisch dargestellten Getriebemotor 16 betätigt wird.

Die Schiebedacheinheit 1 (siehe Fig. 2) weist eine um eine schematisch dargestellte Querachse 18 gelenkig montierte Tragplatte 17 auf, die unter einem vorderen Rahmenelement 19 des Rahmens 2 befestigt ist und den Getriebemotor 16, das Ritzel 15 und die Führungskanäle trägt.

In den Figuren 1 und 2 ist zu sehen, daß die Schiebedacheinheit 1 in die Öffnung 3 zwischen einem vorderen Teil 20 und einem hinteren Teil 21 des Dachoberteils 4 eingesetzt wird.

In Figur 2 sind ein Flansch 22, der mit dem vorderen Teil 20 des Dachoberteils 4 verbunden ist und Teil des vorderen Randes 8 der Öffnung 3 ist, sowie ein Flansch 24, der mit dem hinteren Teil 21 verbunden ist und Teil des hinteren Randes 9 der Öffnung 3 ist, schematisch dargestellt.

Die Flansche 22 und 23 sind derart ausgeführt, daß sie komplementäre Flansche 24, 25 aufnehmen, die mit dem vorderen Rahmenelement 19 bzw. dem hinteren Rahmenelement 26 des Rahmens 2 verbunden sind. Entsprechende Flansche sind im allgemeinen entlang der seitlichen Ränder 10, 11 der Öffnung 3 und der seitlichen Ränder des Rahmens 2 angeordnet.

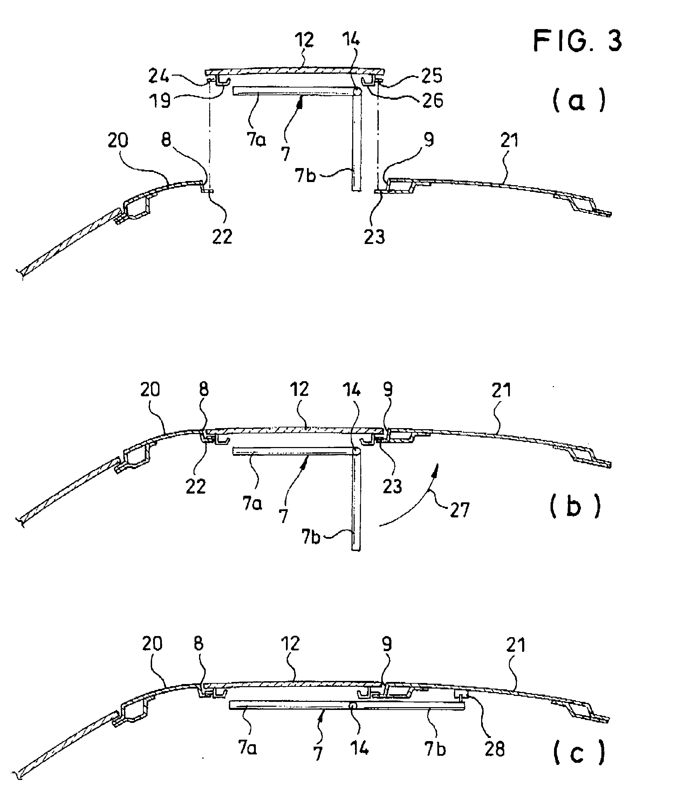

In den Figuren 3a bis 3c sind drei aufeinanderfolgende Positionen der Schiebedacheinheit 1 während dem Anbringen dieser Schiebedacheinheit 1 an der Öffnung 3 des Dachoberteils 4 dargestellt.

In der Fig. 3a wird die Schiebedacheinheit 1 über den Rändern 8 bis 11 der Öffnung 3 gehalten, wobei sich der hintere Abschnitt 6b, 7b jeder Führungsschiene 6, 7 in der hängenden Position befindet.

In der Fig. 3b liegt der Rahmen 2 auf den Flanschen 22, 23 auf, die Teil des vorderen und des hinteren Randes 8 bzw. 9 der Öffnung 3 sind. Die hinteren Abschnitte 6b, 7b befinden sich noch immer in ihrer hängenden Position, werden jedoch anschließend nach oben in eine in etwa horizontale Ausrichtung gehoben, wie durch den Pfeil 27 schematisch dargestellt ist.

In der Fig. 3c befinden sich die hinteren Abschnitte 6b, 7b der Führungsschienen 6, 7 in ihrer aufgerichteten normalen Betriebsposition. Diese hinteren Abschnitte 6b, 7b werden in ihrer aufgerichteten Position durch Befestigungsmittel 28 eines beliebigen Typs gehalten.

Die vorliegende Erfindung ist nicht auf die beschriebenen Ausführungsarten beschränkt, und es können daran zahlreiche Veränderungen und Modifikationen vorgenommen werden, ohne über den Rahmen der Erfindung hinauszugehen.

Beispielsweise kann vorgesehen sein, an den seitlichen Rändern des Rahmens diejenigen Einheiten gelenkig zu montieren, die Gleitschienen bilden und derart ausgeführt sind, daß sie mit dem Deckel 12 verbundene Zapfen aufnehmen, um den Deckel 12 bei seinen Gleitbewegungen zu führen.

### Bezugszeichenliste

- 1: Dachmodul, Schiebedacheinheit
- 2: Rahmen
- 3: Öffnung
- 4: Dachoberteil
- 5: Kraftfahrzeug
- 6: Mittel, Führungsschiene
- 6a: Element, vorderer Schienenabschnitt
- 6b: Element, vorderer Schienenabschnitt
- 7: Mittel, Führungsschiene
- 7a: Element, hinterer Schienenabschnitt
- 7b: Element, hinterer Schienenabschnitt
- 8: Rand
- 9: Rand
- 10: Rand
- 11: Rand
- 12: Deckel
- 13: Blende
- 14: Gelenkachse
- 15: Antriebsritzel
- 16: Getriebemotor
- 17: Tragplatte
- 18: Querachse
- 19: Rahmenelement
- 20: vorderes Teil
- 21: hinteres Teil
- 22: Flansch
- 23: Flansch
- 24: Flansch
- 25: Flansch
- 26: Rahmenelement
- 27: Pfeil
- 28: Befestigungsmittel
- 29: hinterer Rand

## Patentansprüche

1. Dachmodul (1) mit einem Deckel (12) und mit einem Rahmen (2), der in eine in einem Dachoberteil (4) eines Kraftfahrzeugs (5) vorgesehene Öffnung (3) einsetzbar ist, wobei das Dachmodul (1) Einrichtungen (6, 7, 17) umfaßt, von denen zumindest Bauteile (6b, 7b, 17) unter Rändern (8, 9, 10, 11) der Öffnung (3) positionierbar sind, wenn sich das Dachmodul (1) in seiner normalen Position an dem Dachoberteil (4) befindet,
**dadurch gekennzeichnet, daß** die Bauteile (6b, 7b, 17) an dem Rahmen (2) derart um Schwenk- oder Gelenkachsen schwenkbar angelenkt sind, daß jedes Bauteil (6b, 7b, 17) zwischen einer hängenden Position, in der es beim Anbringen des Rahmens (2) durch die Öffnung (3) bewegt werden kann, und einer Betriebsposition beweglich ist, in der Befestigungsmittel (28) jedes Bauteil (6b, 7b, 17) in seiner Normalposition unter den zugeordneten Rändern (8, 9, 10, 11) der Öffnung (3) halten.

2. Dachmodul nach Anspruch 1,
**dadurch gekennzeichnet, daß** die Einrichtungen (6, 7) zwei seitliche sich teilweise unter dem Dachoberteil (4) erstreckende Führungsschienen (6, 7) zur Führung einer verschiebbaren Blende (13) umfassen und daß jede dieser seitlichen Führungsschienen (6, 7) einen vorderen Schienenabschnitt (6a bzw. 7a) und einen hinteren Schienenabschnitt (6b bzw. 7b) aufweist, die an einer querliegenden Gelenkachse (14) miteinander schwenkbar verbunden sind, und daß Mittel (28) vorgesehen sind, um den hinteren Abschnitt (6b, 7b) jeder Führungsschiene (6, 7) im wesentlichen in Ausrichtung mit dem vorderen Abschnitt (6a, 7a) zu halten, so daß die Blende (13) seitlich verschiebbar geführt ist, wenn das Dachmodul (1) in der Öffnung (3) des Dachoberteils (4) angeordnet ist.

3. Dachmodul nach Anspruch 1 oder 2,
**dadurch gekennzeichnet, daß** der bewegliche Deckel (12) ein Schiebedachdeckel (12) ist, der relativ zum Rahmen (2) verschiebbar ist, und daß die Blende (13), die zum unterseitigen Abdecken des Deckel (12) vorgesehen ist, zusammen mit dem Deckel (12) verschiebbar ist.

4. Dachmodul nach einem der Ansprüche 1 bis 3,
**dadurch gekennzeichnet, daß** das Dachmodul (1) in seinem vorderen Teil Führungskanäle für Antriebskabel des beweglich gelagerten Deckels (12) aufweist, die sich bis zu einem von einem Getriebemotor (16) betätigten Ritzel (15) erstrecken, daß das Dachmodul (1) eine um eine Querachse (18) angelenkte Tragplatte (17) umfaßt, die unter einem vorderen Rahmenelement (19) des Rahmens (2) befestigt ist, und daß die Tragplatte (17) den Getriebemotor (16), das Ritzel (15) und die Führungskanäle enthält.

5. Dachmodul nach einem der Ansprüche 1 bis 4,
**dadurch gekennzeichnet, daß** der bewegliche Deckel (12) ein Schiebedachdeckel (12) ist, der relativ zum Rahmen (2) verschiebbar ist, und daß die Bauteile Führungsschienen für diesen Schiebedachdeckel sind, die zum Einsetzen des Dachmoduls um Gelenke abklappbar sind.

## Claims

1. Roof module (1) having a panel (12) and having a frame (2) which can be inserted into an opening (3) provided in an upper roof part (4) of a motor vehicle (5), the roof module (1) comprising devices (6, 7, 17) of which at least components (6b, 7b, 17) can be positioned under edges (8, 9, 10, 11) of the opening (3) when the roof module (1) is in its normal position on the upper roof part (4),
**characterized in that** the components (6b, 7b, 17) are attached to the frame (2) such that they can be pivoted about pivot or joint axes, **in that** each component (6b, 7b, 17) can be moved between a suspended position, in which it can be moved through the opening (3) as the frame (2) is fitted, and an operating position, in which fixing means (28) hold each component (6b, 7b, 17) in its normal position under the associated edges (8, 9, 10, 11) of the opening (3).

2. Roof module according to Claim 1, **characterized in that** the devices (6, 7) comprise two lateral guide rails (6, 7) extending partly under the upper roof part (4) in order to guide a displaceable shield (13), and **in that** each of these lateral guide rails (6, 7) has a front rail section (6a and 7a) and a rear rail section (6b and 7b), which are connected to a transverse joint axis (14) such that they can be pivoted with each other, and **in that** means (28) are provided in order to keep the rear section (6b, 7b) of each guide rail (6, 7) substantially in alignment with the front section (6a, 7a), so that the shield (13) is guided such that it can be displaced laterally when the roof module (1) is arranged in the opening (3) in the upper roof part (4).

3. Roof module according to Claim 1 or 2, **characterized in that** the movable panel (12) is a sliding roof panel. (12), which can be displaced relative to the frame (2), and **in that** the shield (13), which is provided in order to cover the underside of the panel (12), can be displaced together with the panel (12).

4. Roof module according to one of Claims 1 to 3, **characterized in that**, in its front part, the roof module (1) has guide channels for drive cables of the movably mounted panel (12), which cables extend as far as a pinion (15) actuated by a geared motor (16), **in that** the roof module (1) comprises a support plate (17) which is attached around a transverse axis (18) and is fixed under a front frame element (19) of the frame (2), and **in that** the support plate (17) contains the geared motor (16), the pinion (15) and the guide channels.

5. Roof module according to one of Claims 1 to 4, **characterized in that** the movable panel (12) is a sliding roof panel (12) which can be displaced relative to the frame (2), and **in that** the components are guide rails for this sliding roof panel, which can be folded away around joints in order to insert the roof module.

## Revendications

1. Module de toit (1) doté d'un couvercle (12) et d'un cadre (2) pouvant être inséré dans une ouverture (3) prévue dans une partie supérieure de toit (4) d'un véhicule automobile (5), le module de toit (1) comprenant des installations (6, 7, 17) qui permettent de positionner sous des bords (8, 9, 10, 11) de l'ouverture (3) au moins des composants (6b, 7b, 17) lorsque le module de toit (1) se trouve dans sa position normale sur la partie supérieure de toit (4),
**caractérisé en ce que** les composants (6b, 7b, 17) sont articulés sur le cadre (2) de manière pivotable autour d'axes de pivotement ou d'articulation de manière à ce que chaque composant (6b, 7b, 17) soit mobile entre une position de suspension dans laquelle il peut, lors de la pose du cadre (8), être déplacé à travers l'ouverture (3) et une position de service dans laquelle des moyens de fixation (28) maintiennent chaque composant (6b, 7b, 17) dans sa position normale sous les bords (8, 9, 10, 11) associés de l'ouverture (3).

2. Module de toit selon la revendication 1
**caractérisé en ce que** les installations (6, 7) comprennent deux glissières (6, 7) latérales s'étendant partiellement sous la partie supérieure de toit (4) pour le guidage d'un panneau mobile (13),
et **en ce que** chacune de ces glissières latérales (6, 7) présente une section de rail avant (respectivement 6a et 7a) et une section de rail arrière (respectivement 6b et 7b) reliées les unes aux autres de manière pivotable par un axe d'articulation transversal (14) et **en ce que** des moyens (28) sont prévus pour maintenir la section arrière (6b, 7b) de chaque glissière (6, 7) essentiellement dans l'alignement de la section avant (6a, 7a) de manière à ce que le panneau (13) puisque coulisser latéralement lorsque le module de toit (1) est disposé dans l'ouverture (3) de la partie supérieure de toit (4).

3. Module de toit selon la revendication 1 ou 2,
**caractérisé en ce que** le couvercle mobile (12) est un couvercle de toit ouvrant coulissant (12) pouvant être déplacé par rapport au cadre (2) et **en ce que** le panneau (13) prévu pour recouvrir le couvercle (12) sur sa face inférieure peut être déplacé en même temps que le couvercle (12).

4. Mobile de toit selon l'une quelconque des revendications 1 à 3,
**caractérisé en ce que** le module de toit (1) présente dans sa partie avant des canaux de guidage pour des câbles d'entraînement du couvercle (12) mobile qui s'étendent jusqu'au pignon (15) commandé par un électroréducteur (16), **en ce que** le module de toit (1) comprend une plaque d'appui (17) articulée autour d'un axe transversal (18) et fixée sous un élément avant (19) du cadre (2) et **en ce que** la plaque d'appui (17) comprend l'électroréducteur (16), le pignon (15) et les canaux de guidage.

5. Module de toit selon l'une quelconque des revendications 1 à 4,
**caractérisé en ce que** le toit mobile (12) est un couvercle de toit ouvrant coulissant (12) pouvant être déplacé par rapport au cadre (2) et **en ce que** les composants sont des glissières pour ce couvercle de toit ouvrant coulissant pouvant être rabattues autour d'articulations pour insérer le module de toit.
